# EUROPÄISCHE PATENTANMELDUNG

(11) **EP 1 271 309 A1**
(43) Veröffentlichungstag der Anmeldung: **02.01.2003**
(21) Anmeldenummer: 01114820.2
(22) Anmeldetag: 27.06.2001
(51) Int. Cl.: G06F 9/44, G06F 9/46

(54) **Verfahren und System zur Verwaltung von Beziehungen zwischen Softwarekomponenten**

(71) Anmelder: Interactive Objects Software GmbH, 79100 Freiburg (DE)
(72) Erfinder: Lodderstedt, Torsten, Dipl.-Inform., 79249 Merzhausen (DE)

(57) **Zusammenfassung**

Die Erfindung bezieht sich auf ein Verfahren und ein System zur Verwaltung von Beziehungen zwischen Objekten in einem komponentenbasierten Softwaresystem. Dabei ist das Softwaresystem in einem Rechnersystem implementiert, das wenigstens eine Datenbank und wenigstens einen Applikationsserver enthält. Zu jeder in binärer Form im Applikationsserver installierten Komponente werden Konfigurationsinformationen installiert, in denen Informationen über alle Komponenten abgelegt sind, die über die jeweilige Beziehung erreichbar sind. Die Komponenten weisen Verwaltungsschnittstellen auf, die für jede Beziehung über eine Suchmethode verfügen, und das Anlegen der Beziehung zwischen einem referenzierenden Objekt zu einem zu referenzierenden Objekt erfolgt dadurch, dass ausgelöst durch einen Aufruf das referenzierende Objekt den langlebigen Identifikator des zu referenzierenden Objektes abfragt und im langlebigen Speicher des referenzierenden oder des referenzierten Objektes ablegt und ein Zugriff auf die Beziehungen zwischen Objekten in mehreren Schritten erfolgt, für die zwei alternative Schrittfolgen angegeben sind.

## Beschreibung

Die Erfindung bezieht sich auf ein Verfahren und ein System zur Verwaltung von Beziehungen zwischen Objekten in komponentenbasierten Softwaresystemen.

Komponenten werden in zunehmendem Maße als Bausteine von Softwaresystemen eingesetzt. Sie zeichnen sich durch folgende Eigenschaften aus:
- Eine Softwarekomponente besitzt wohldefinierte öffentliche Schnittstellen, über die eine Anwendung oder andere Komponenten auf ihre Dienste zugreifen können. Im Allgemeinen werden zwei Schnittstellen unterschieden: die Verwaltungsschnittstelle und die Exemplarschnittstelle. Über die Verwaltungsschnittstelle werden Exemplare der Komponente erzeugt und gesucht. Über die Exemplarschnittstelle wird auf die Dienste eines konkreten Exemplars zugegriffen.
- Die Realisierung/Implementierung einer Komponente wird vor dem Benutzer einer Komponente verborgen. Man bezeichnet diese Eigenschaft auch als Kapselung. Damit unterstützen Softwarekomponenten die Modularisierung von Software-Systemen als Voraussetzung für deren evolutionäre Weiterentwicklung und deren Zusammenbau auf der Basis von selbst entwickelten und zugekauften Bausteinen.

Ein Komponententyp ist die konkrete Realisierung eines Softwaremoduls als Vorlage für eine Menge von Entitäten in der Problemdomäne, z.B. alle Kunden in einer

Anwendungsdomäne. Er definiert die Struktur und das Verhalten der Entitäten. Die Entitäten werden im Softwaresystem durch sogenannte Exemplare des Komponententyps repräsentiert.

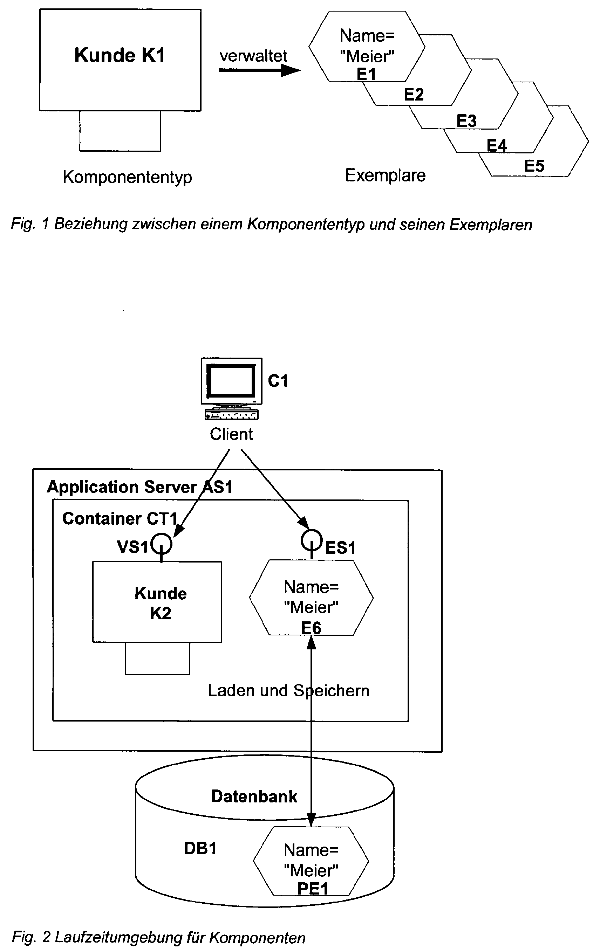

Fig. 1 zeigt das Verhältnis zwischen Komponententyp und Exemplaren. Der Komponententyp Kunde K1 definiert die prinzipielle Struktur und das Verhalten von Kundenentitäten. Sie besitzt prinzipiell ein Attribut "Name". Die einzelnen Exemplare E1-E5 besitzen konkrete Werte für die verschiedenen Attribute der Struktur und eine Identität. Z.B. hat Exemplar E1 den Namen "Meier".

Es werden im Allgemeinen zwei Arten von Komponenten unterschieden, kurzlebige, transiente und langlebige, persistente Komponenten. Transiente Komponenten übernehmen zumeist Hilfsfunktionen innerhalb eines Softwaresystems und können die Kommunikation zwischen Subsystemen optimieren. Persistente Komponenten repräsentieren Entitäten des Geschäftsbereiches, der mit Hilfe des Software-Systems unterstützt werden soll, z.B. ein Kunde oder ein Konto. Solche Komponenten sind über die Lebenszeit eines Serverprozesses hinaus eindeutig identifizierbar, ihr Zustand wird in einem Datenbankmanagementsystem gespeichert. Der Fokus wird im weiteren auf persistenten Komponenten liegen.

In vielen bekannten Fällen kommen verteilte Komponententechnologien zum Einsatz. Sie zeichnen sich dadurch aus, dass Komponenten auf verschiedenen Rechnern eines Rechnersystems betrieben werden können und für die Anwendung trotzdem die Illusion eines zentralen Systems erzeugt wird. Dadurch können zentrale Ressourcen effizient genutzt werden und es ergeben sich völlig neue Dimensionen hinsichtlich der Skalierbarkeit eines Softwaresystems. Die bekanntesten Komponententechnologien sind
- COM (Roger Sessions, "COM and DCOM - Microsoft's Vision for Distributed Objects", Wiley & Sons Inc., 1998, ISBN 0-471-19381-X),
- .NET (David S. Platt, "Introducing Microsoft® .NET", Microsoft Press, 2001, 0-7356-1377-X),
- Enterprise JavaBeans (Ed Roman, "Mastering Enterprise Java Beans and the Java 2 Platform, Enterprise Edition", Wiley & Sons Inc., 1999, ISBN 0-471-33229-1) und
- CORBAcomponents.

Verteilte Komponenten werden in sogenannten Applikationsservern betrieben, wobei der Applikationsserver verschiedene sogenannte Container enthalten kann, die als eigentliche Ablaufumgebung der Komponenten fungieren. Der Applikationsserver verfügt über einen oder mehrere sogenannte Container, die aus einem oder mehreren Betriebssystemprozessen bestehen. Der Container stellt verschiedene Dienste für den Betrieb von Komponenten bereit, z.B. Sicherheit, Lifecycle-Management, Transaktionsmanagement und Persistenz. Ein Komponententyp wird in einem oder mehreren Containern installiert. Eine solche Komponenteninstallation wird im weiteren als Komponente bezeichnet. Komponenten eines Typs unterscheiden sich durch verschiedene Konfigurationen (z.B. bezüglich der verwendeten Datenbankinstanz) und unterschiedliche symbolische Namen. Ein Client bindet unter Verwendung des symbolischen Namens an die Verwaltungsschnittstelle einer Komponente und erzeugt oder sucht konkrete Exemplare der Komponente. Von jeder Komponente kann es ein oder mehrere Exemplare geben. Deren persistenter Zustand wird in einem Datenbankmanagementsystem gespeichert. Der Container ist für das Lifycycle-Management der Komponentenexemplare zuständig. Wenn ein Client auf ein Exemplar zugreifen möchte, erzeugt der Container eine transiente Repräsentation des Komponentenexemplars und lädt die Daten des in der Datenbank gespeicherten persistenten Exemplars in diese Laufzeitrepräsentation. Nach Beendigung der Benutzung wird der Zustand des Exemplares in der Datenbank gespeichert und die Laufzeitinstanz freigegeben. Der Zugriff auf die Exemplare einer Komponente erfolgt mit Hilfe von sogenannten Referenzen, die der Applikationsserver erzeugt.

Fig. 2 zeigt den beispielhaften Aufbau eines Applikationsservers AS1. Der Applikationsserver AS1 enthält einen Container CT1, in dem eine Komponente K2 des Komponententyps Kunde installiert ist. PE1 ist ein Exemplar der Komponente Kunde, dessen Zustand in der Datenbank DB1 abgespeichert wird. Der Client C1 möchte auf dieses Exemplar zugreifen. Dazu muß zunächst auf die Verwaltungsschnittstelle VS1 zugegriffen werden. Dazu benötigt der Client C1 eine Referenz auf diese Schnittstelle. Der Client kennt den symbolischen Namen der Verwaltungschnittstelle der Komponente K2 innerhalb der Applikationsserverumgebung. Der Client benutzt einen Dienst des Applikationsservers, der einen symbolischen Namen in eine solche Referenz umwandeln kann, um eine transiente Referenz auf die Verwaltungsschnittstelle VS1 zu erlangen. Diesen Vorgang bezeichnet man als Binden des Clients an eine Komponente. Wenn der Client C1 in Besitz einer gültigen Referenz auf die Verwaltungsschnittstelle VS1 ist, ruft er auf dieser Schnittstelle eine Suchmethode auf, die den Kunden anhand seines Namens sucht. Dabei handelt es sich im Beispiel um das Exemplar PE1. Nachdem das Exemplar gefunden wurde, erzeugt der Container die Laufzeitrepräsentation E6 des Komponententyps Kunde und lädt die Daten des Exemplars PE1 in die Laufzeitrepräsentation E6. Als Ergebnis erhält der Client eine Referenz auf die Laufzeitinstanz E6, die er benutzt, um Operationen auf der Laufzeitrepräsentation E6 auszuführen. Wenn die Laufzeitrepräsentation nicht mehr benötigt wird, wird der Zustand wieder in der Datenbank DB1 gespeichert.

In jeder Problemdomäne sind die verschiedenen Entitäten miteinander vernetzt. Softwarekomponenten sind Repräsentanten solcher Entitäten und müssen deshalb ebenfalls miteinander Beziehungen eingehen können. Z.B. steht ein Kunde in einer Bankanwendung mit seinen Konten in einer Beziehung. Das ermöglicht es einem Client, über die Verwaltungsschnittstelle der Komponente Kunde ein Kundenexemplar, unter Verwendung von dessen Kundennummer, suchen zu lassen und, von diesem Kundenexemplar ausgehend, auf die mit dem Kunden in Beziehung stehenden Konten-Exemplare zuzugreifen. Durch Beziehungen werden Objektgeflechte in einem Softwaresystem aufgebaut, die der Navigation durch das Softwaresystem dienen.

Beziehungen sind gerichtet, sie können entweder nur in einer Richtung oder in beide Richtungen zwischen den beteiligten Komponenten navigiert werden. Erstere bezeichnet man als unidirektionale Beziehungen, letztere als bidirektionale Beziehungen. Bidirektionale Beziehungen können prinzipiell aus zwei unidirektionalen Beziehungen zusammengesetzt werden. Deshalb wird im Folgenden eine Beziehung ausschließlich als gerichtete Referenz von einer Komponente zu einer anderen Komponente betrachtet.

Beziehungen können anhand der Anzahl der referenzierbaren Exemplare klassifiziert werden. Diese Eigenschaft wird als Kardinalität einer Beziehung bezeichnet. Hier werden zwei Arten unterschieden: Wenn maximal ein Exemplar referenziert werden kann, spricht man von der Kardinalität 1, wenn mehrere Exemplare referenziert werden können, ist die Kardinalität n.

Die meisten komponentenorientierten Systeme werden unter Zuhilfenahme der Objekttechnologie realisiert. Die Objekttechnologie ist unter anderem dadurch gekennzeichnet, dass das Prinzip der Vererbung als Mittel der Abstraktion eingesetzt wird. Die Vererbung ist eine Beziehung zwischen Typen. Es werden gemeinsame Eigenschaften verschiedener Typen zu einem sogenannten Basistyp zusammengefaßt und diese Typen stehen dann in einer Vererbungsbeziehung zu ihrem Basistyp. Die Vererbung bietet viele Vorteile für die Modularisierung von Softwaresystemen. Zum einen kann eine Anwendung auf der Ebene des Basistyps mit den Exemplaren aller abgeleiteten Typen kommunizieren. Sie muß diese Typen nicht einmal kennen. Zum anderen können gemeinsame Funktionen und Eigenschaften auf der Ebene des Basistyps realisiert und dann von den abgeleiteten Typen über die Beziehung zu ihrem Basistyp geerbt werden.

Angesichts des Stellenwerts der Vererbung bei der Realisierung moderner Softwaresysteme ist es unverzichtbar, dass ein Komponentensystem Beziehungen zwischen den Exemplaren von Komponententypen in Kombination mit Vererbung unterstützt.

Eine Übersicht über Beziehungen und deren Verwendung bei der Entwicklung objektorientierter und komponentenorientierter Softwaresysteme geben Martin Fowler und Kendall Scott in "UML Distilled", Addison-Wesley, 1997, ISBN 0-201-32563-2.

Die oben beschriebenen Referenzen auf Komponenten, die ein Applikationsserver für den Zugriff von einem Client auf ein Komponenten-Exemplar bereitstellt, eignen sich nicht für die langlebige Speicherung von Beziehungen zwischen Softwarekomponenten, da sie im Allgemeinen kurzzeitig gültige Informationen über die Lokation eines Komponentenexemplars, wie z.B. die TCP/IP-Portnummer des Applikationsserverprozesses, in dem die Komponente sich zum aktuellen Zeitpunkt befindet, enthalten. Diese Lokation kann sich bei jedem Aktivierungszyklus ändern.

Es sind unterschiedliche Lösungsansätze zur Realisierung langlebiger Beziehungen in einem komponentenbasierten Softwaresystem bekannt. Einige davon werden von Grant Holland in "Entity Bean relationsships in EJB 1.1, Part 1: The basic technique", Java Report, Vol. 6, No 4., April 2001, Seiten 72ff und "Entity Bean relationsships in EJB 1.1, Part 1: Robust and practical techniques", Java Report, Vol. 6, No 6., Juni 2001, Seiten 58ff beschrieben. Folgende Entwicklungsrichtungen zeichnen sich ab:

Hersteller von Werkzeugen zum Object-to-Relational-Mapping, wie z.B. WebGain mit dem Werkzeug TopLink for Java, erweitern ihr Werkzeuge für die Unterstützung von Softwarekomponenten. Dazu werden zusätzliche Mappinginformationen und Hilfsschnittstellen in die Komponenten eingefügt, um die Beziehungen abspeichern und die Exemplare beim Navigieren der Beziehung wieder aktivieren zu können. Diese Werkzeuge unterstützen neben bloßen Beziehungen zwischen zwei Typen von Komponenten im Allgemeinen auch Beziehungen zwischen Vererbungshierarchien von Komponenten. Diese Unterstützung wird aber zumeist mit einer Verletzung der Kapselung von Komponenten, nämlich durch den direkten Durchgriff auf die Implementierung und das Datenbankschema der referenzierten Komponente, und mit Einschränkungen hinsichtlich der physischen Verteilbarkeit der Komponenten erkauft.

Darüber hinaus ist zu berücksichtigen, dass es sich bei solchen Produkten in der Regel um Zusatzprodukte zu Applikationsservern handelt. Dadurch entstehen zusätzliche Kosten für die Anschaffung und den Betrieb des Softwaresystems. Außerdem kann es in verstärktem Maße zu Kompatibilitätsproblemen zwischen den verschiedenen eingesetzten Produkten kommen. Für jede neue Version des Applikationsservers muß vom Hersteller des Zusatzproduktes eine passende Version seines Werkzeuges bereitgestellt werden, dadurch kann sich der Projektfortgang verzögern.

Einige Hersteller von Applikationsservern, wie Borland mit dem AppServer oder IBM mit dem Websphere Application Server in Kombination mit IBM Visual Age for Java, unterstützen die Realisierung von Beziehungen zwischen Komponenten, ohne die Kapselung der Komponenten zu verletzen. Dabei wird der referenzierenden Komponente in ihren Konfigurationsinformationen die Information mitgegeben, welche Komponente sie in einer konkreten Installation referenzieren kann. Es wird entweder der persistente Identifikator des referenzierten Komponentenexemplars im persistenten Zustand des referenzierenden Komponentenexemplars (a) oder der persistente Identifikator des referenzierenden Komponentenexemplars im persistenten Zustand des referenzierten Komponentenexemplars (b) gespeichert. Diese Muster sind Adaptionen gängiger Konzepte für die Realisierung von Beziehungen im Kontext relationaler Datenbankmanagementsystem an die Verwendung in Komponentensystemen. Die Auflösung der Beziehung erfolgt über die Verwaltungsschnittstelle der referenzierten Komponente. Zu dieser Verwaltungsschnittstelle wird unter Verwendung der oben beschriebenen Konfigurationsinformationen gebunden. Im Fall (a) wird dort eine Suchfunktion aufgerufen, die den persistenten Identifikator des gesuchten Komponentenexemplars als Parameter erhält und eine transiente Referenz auf das entsprechende Exemplar zurückgibt. Im Fall (b) wird die Suchfunktion mit dem persistenten Identifikator des referenzierenden Komponentenexemplars aufgerufen und sucht anhand dieses Identifikators die passende(n) Exemplar(e), die diesen Identifkator in ihrem persistenten Zustand gespeichert haben. Für dieses/diese Exemplar(e) werden entsprechende transiente Referenzen an den Aufrufer zurückgeliefert.

Diese Lösung hat den Vorteil, dass sie die technischen Eigenschaften einer Komponente, wie die Verteilbarkeit und die Kapselung, nicht einschränkt. Es werden aber keine Beziehungen zwischen Vererbungshierarchien von Komponenten unterstützt.

Damit besteht das Problem, dass keiner der derzeit existierenden Ansätze Beziehungen in Kombination mit Vererbung zwischen Komponenten unterstützt, ohne dabei negative Auswirkungen auf die Verteilbarkeit und Kapselung einer Komponente zu haben.

Der Erfindung liegt deshalb die Aufgabe zugrunde, eine Lösung für die Realisierung von persistenten Beziehungen zwischen Softwarekomponenten anzugeben, die die vorteilhaften Eigenschaften von Komponentensystemen nicht einschränkt, und gleichzeitig die Möglichkeit bietet, Beziehungen zwischen Vererbungshierarchien von Softwarekomponenten zu realisieren.

Diese Aufgabe wird durch ein Verfahren zur Verwaltung von Beziehungen zwischen Objekten in komponentenbasierten Softwaresystemen gelöst, dass die in Anspruch 1 oder 2 angegebenen Merkmale aufweist. Vorteilhafte Ausgestaltungen und Systeme zur Durchführung des Verfahrens sind in weiteren Ansprüchen angegeben.

Die erfindungsgemäßen Lösungen sind Weiterentwicklungen des oben als zweites beschriebenen Ansatzes. Zur persistenten Speicherung einer Beziehung werden wie dort die persistenten Identifikatoren von Komponenten verwendet. Dabei gibt es wie beschrieben zwei Varianten der Speicherung:

Zum einen ist es möglich, den oder die Identifikatoren der referenzierten Komponenten-Exemplare im persistenten Zustand des referenzierenden Komponenten-Exemplars zu speichern. Diesen Weg geht man im Allgemeinen bei der Realisierung von Beziehungen der Kardinalität 1.

Die Alternative besteht darin, den Identifikator des referenzierenden Komponenten-Exemplars im referenzierten Komponenten-Exemplar zu speichern. Dieses Muster wird im Allgemeinen verwendet, wenn die Beziehung auf mehr als ein Komponenten-Exemplar verweisen kann (Kardinalität n).

Wenn auf die referenzierten Exemplare wieder zugegriffen werden soll, ist es notwendig, den oder die Fremdschlüssel in transiente Referenzen auf die referenzierten Komponentenexemplare umzuwandeln, die ein Client für den Zugriff auf die Komponenten verwenden kann. Für die Umwandlung werden die Verwaltungsschnittstellen der Komponenten verwendet, die am referenzierten Ende der Beziehung teilnehmen können. Im persistenten Zustand eines Exemplars werden zwar die Fremdschlüssel der referenzierten Exemplare gespeichert, aber nicht notwendigerweise die dazugehörigen Komponenten. Jedoch ist nur die Komponente, die ein konkretes Exemplar verwaltet, bzw. ihre Verwaltungsschnittstelle, in der Lage, Laufzeitreprepräsentationen der Komponentenexemplare und Referenzen auf diese Exemplare zu erzeugen.

Deshalb werden für jede Beziehung bei der referenzierenden Komponente (und damit gültig für alle Exemplare der referenzierenden Komponente) Informationen über alle Komponenten abgelegt, deren Exemplare durch die Beziehung referenziert werden können.

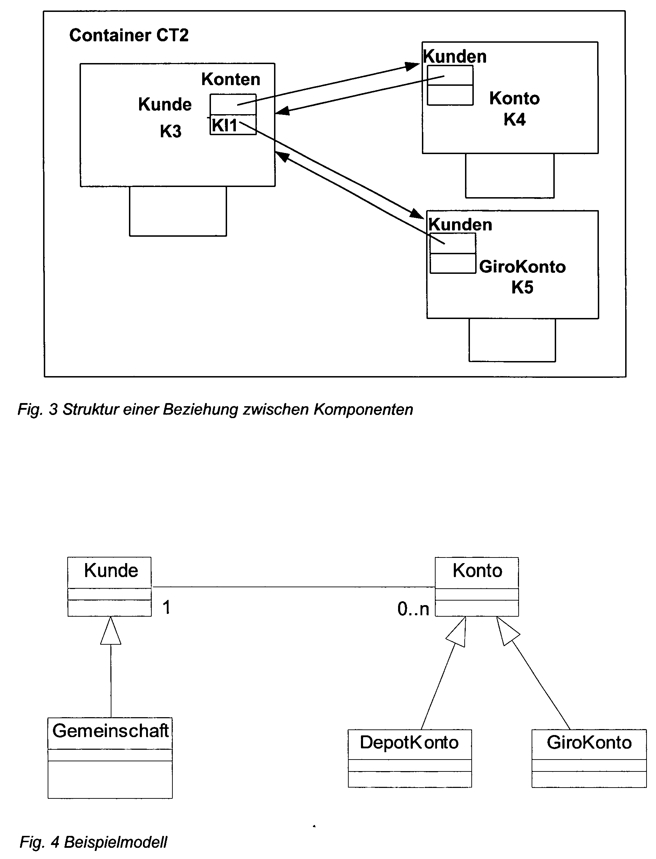

Der prinzipielle Aufbau einer solchen Struktur wird in Fig. 3 illustriert. Die Komponente K3 verfügt über Konfigurationsinformationen KI1, in denen symbolische Referenzen auf die Komponenten K4 und K5 abgelegt sind. Damit können Exemplare dieser Komponenten mit den Exemplaren der Komponente K3 in Beziehung gesetzt werden. Die Anzahl der referenzierbaren Komponenten ist nicht limitiert. Die abgelegte Information ist so beschaffen, dass die referenzierende Komponente unter Nutzung von Mechanismen des Applikationsservers zu den Verwaltungsschnittstellen der referenzierten Komponenten binden kann.

Um die Beziehung zu traversieren, bindet das referenzierende Komponenten-Exemplar zunächst zu den Verwaltungsschnitsttellen der referenzierten Komponenten. Danach werden die gespeicherten Fremdschlüssel verwendet, um die konkreten referenzierten Komponenten-Exemplare mit Hilfe von Suchmethoden der Verwaltungsschnittstellen zu finden. Als Ergebnis des Aufrufes einer Suchmethode erhält die referenzierende Komponte im Erfolgsfall eine oder mehrere transiente Referenzen auf die gesuchten Komponentenexemplare. Der konkrete Algorithmus der Suche gestaltet sich in Abhängigkeit von der Kardinalität der Beziehung unterschiedlich:
- Bei der Kardinalität 1 werden die Suchmethoden der verschiedenen Komponenten parallel oder sequentiell aufgerufen und der erste Treffer als Ergebnis verwendet.
- Bei der Kardinalität n werden die Suchergebnisse der verschiedenen Komponenten zu einem Gesamtergnis zusammengefaßt.

Als Parameter der Suche werden entweder der (die) gespeicherte(n) Fremdschlüssel der referenzierten Komponentenexemplare oder der Identifikator des referenzierenden Komponentenexemplares verwendet.

Weitere vorteilhafte Eigenschaften der Erfindung neben der Unterstützung von Beziehungen zwischen Vererbungshierachien sind:
- Es ist möglich, Komponenten eines Komponententyps, die in verschiedenen Containern eines Applikationsservers installiert sind, in eine Beziehung einzubeziehen.
- Die Realisierung der Erfindung kann ausschließlich mit den Mitteln des Applikationsservers erfolgen und ist nicht an die Verwendung von zusätzlichen Produkten gebunden.

Eine weitere Beschreibung der Erfindung wird im folgenden Beispiel gegeben.

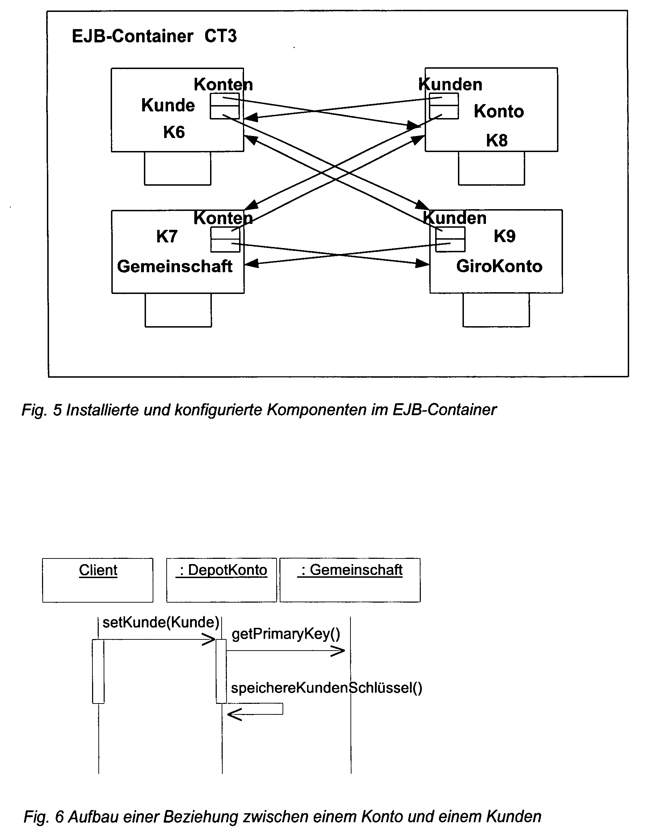

Es werden dazu folgende Figuren verwendet:
- Fig. 4 zeigt eine Übersicht über die verwendeten Komponententypen in Form eines Klassendiagrammes in der Notation der Unified Modeling Language (UML).
- Die verschiedenen Abläufe während der Arbeit mit Beziehungen werden durch Fig. 6 bis Fig. 9 in Form von Sequenz-Diagrammen in der Notation der UML illustriert.

Die Problemdomäne wird in Fig. 4 dargestellt. Es handelt sich dabei um eine einfache Anwendung zur Verwaltung von Kunden und deren Konten. Zwischen dem Komponententyp *Kunde* und dem Komponententyp *Konto* existiert eine bidirektionale Beziehung. In der technischen Realisierung werden daraus zwei unidirektionale Beziehungen im Sinne der Erfindung, die sich durch folgende Aspekte unterscheiden:

Die Beziehung vom Konto zum Kunden hat die Kardinalität 1 und der Identifikator des jeweils referenzierten Kunden wird im Konto gespeichert.

Die Beziehung vom Kunden zu seinen Konten hat die Kardinalität n. Für diese Richtung der Beziehung ist kein zusätzlicher Speicherplatz erforderlich. Es wird der Identifikator des Kunden beim Konto gespeichert, was bedeutet, dass die Information beim Konto für die Realisierung beider Beziehungen benutzt wird.

Zusätzlich werden im Beispiel von jedem der Basis-Komponententypen ein oder mehrere Untertypen abgeleitet, die ebenfalls an der Beziehung teilnehmen sollen.

Als technolgisches Umfeld für die Realisierung wird ein Applikationsserver nach dem Enterprise JavaBeans (EJB) Standard in der Version 1.1. angenommen. Alle Komponententypen werden als Entity-Beans mit Container Managed Persistence realisiert. Als Identifikator wird der Primary Key der jeweiligen Komponente verwendet, über den laut EJB-Standard jedes Entity-Bean verfügen muß. Die Konfiguration der über eine Beziehung referenzierbaren Komponenten erfolgt mit Hilfe von EJB-References.

Die Konfiguration der Komponenten im installierten Softwaresystem zeigt Fig. 5. Bei jeder Komponente wird für die Beziehung zum jeweils gegenüberliegenden Vererbungsbaum ein JNDI-Kontext in der lokalen Umgebung abgelegt, der eine EJB-Referenz für jede einzelne referenzierbare Komponente enthält. Bei der Komponente Kunde enthält dieser JNDI-Kontext z.B. zwei Verweise, einen auf die Komponente "Konto" und einen auf die Komponente "GiroKonto".

Den Ablauf beim Aufbau einer Beziehung zwischen einem Konto und einem Kunden zeigt Fig. 6. Der Vorgang wird durch einen Aufruf der Methode *setKunde* ausgelöst. Dieser Methode wird eine Referenz auf ein Exemplar der Komponente Kunde als Parameter übergeben. Das Konto-Exemplar fragt bei diesem Exemplar zuerst seinen Schlüsselwert ab (*getPrimaryKey*) und speichert diesen dann in seinem persistenten Zustand.

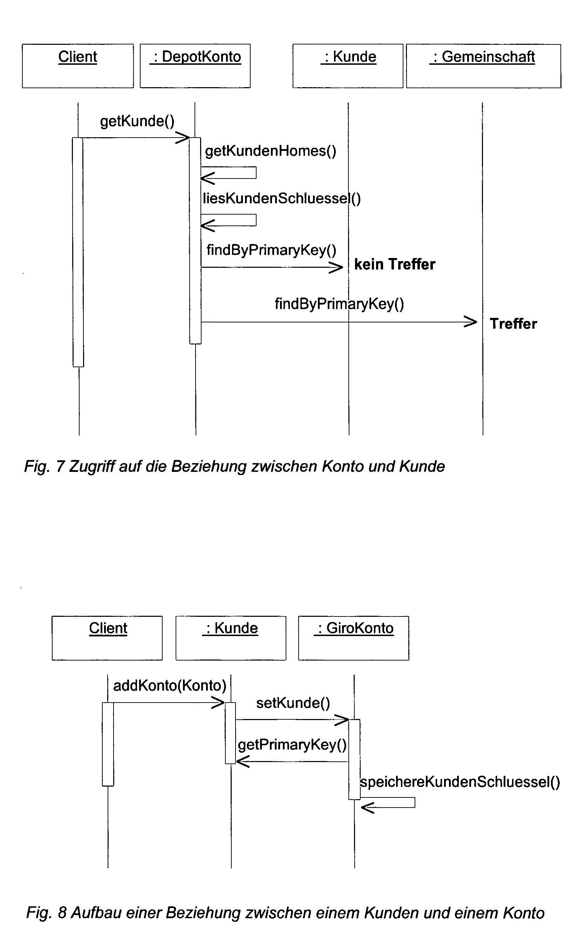

Den Ablauf beim Zugriff auf die Beziehung zeigt Fig. 7. Ein externer Client löst ihn durch den Aufruf der Methode *getKunde* aus. Im ersten Schritt greift das Kunden-Exemplar auf den lokalen JNDI-Kontext der Komponente "Konto" zu, in dem die EJB-Referenzen auf die referenzierbaren Komponenten der Beziehung gespeichert sind. Als Resultat dieses Zugriffs erhält das Komponentenexemplar eine Menge von

Referenzen auf die Verwaltungsschnittstellen dieser Komponenten. Das Komponentenexemplar ruft jetzt nacheinander die Methode *findByPrimaryKey* auf jeder dieser Verwaltungsschnittstellen auf und übergibt ihr als Parameter den gespeicherten Schlüsselwert des gesuchen Kunden-Exemplars. Die Suche wird beendet, wenn ein Exemplar gefunden wurde. Im skizzierten Anwendungsfall wird davon ausgegangen, dass es sich bei dem gesuchten Exemplar um eine Gemeinschaft handelt. Die Komponente "Kunde" kennt das gesuchte Exemplar nicht und signalisiert das durch das Werfen einer Ausnahme vom Typ *NoSuchObjectException.* Danach ruft das Konto-Exemplar die Suchmethode auf der Verwaltungsschnittstelle der Komponente "Gemeinschaft" auf. Diese Komponente verwaltet das gesuchte Exemplar und liefert als Ergebnis der Methode eine transiente Referenz auf das gesuchte Exemplar. Diese Referenz wird als Ergebnis der Methode *getKunde* an den externen Client zurückgegeben.

Die Beziehung kann auch aus der Richtung der Kunden-Komponenten etabliert und gelesen werden. Die entsprechenden Abläufe werden im Folgenden beschrieben.

Den Ablauf beim Aufbau einer Beziehung zwischen einem Kunden und einem Konto zeigt Fig. 8. Er wird durch den Aufruf der Methode *addKonto* ausgelöst. Dieser Methode wird vom Aufrufenden eine Referenz auf ein Kontoexemplar übergeben. Da die persistente Speicherung der Beziehung in diesem Anwendungsbeispiel immer auf der Seite des Kontos erfolgt, ruft der Kunde beim zu referenzierenden Konto-Exemplar die Methode *setKunde* auf, deren Ablauf oben schon beschrieben wurde. Damit ist die Beziehung etabliert.

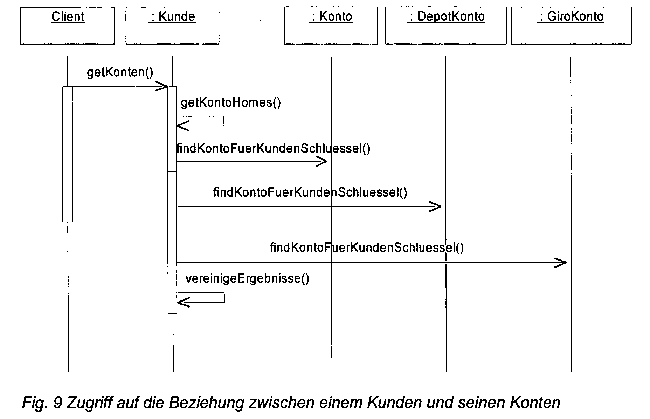

Den Ablauf beim Zugriff auf die Beziehung zeigt Fig. 9. Er wird durch den Aufruf der Methode *getKonten* auf einem Kunden-Exemplar angestoßen. Zuerst greift das Exemplar auf den JNDI-Kontext für die Beziehung zu und erhält eine Liste mit den Verwaltungsschnittstellen der referenzierbaren Komponenten. Nun werden mit Hilfe der Suchmethode *findkontoFuerKundenSchluessel* auf diesen Verwaltungsschnittstellen alle Kunden-Exemplare gesucht, die den Schlüsselwert des suchenden Kunden-Exemplars als Fremdschlüssel in ihrem persistenten Zustand gespeichert haben. Die Methode wird auf jeder der Verwaltungsschnittstellen mit dem Schlüsselwert des referenzierenden Kunden-Exemplars aufgerufen und liefert als Ergebnis eine Menge von Referenzen auf Konten-Exemplare. Die einzelnen Ergebnismengen werden zu einer Gesamtmenge zusammengefasst und an den aufrufenden Client zurückgegeben.

## Patentansprüche

1. Verfahren zur Verwaltung von Beziehungen zwischen Objekten in einem komponentenbasierten Softwaresystem, wobei:
• das Softwaresystem in einem Rechnersystem implementiert ist, das wenigstens eine Datenbank und wenigstens einen Applikationsserver enthält,
• zu jeder in binärer Form im Applikationsserver installierten Komponente Konfigurationsinformationen installiert werden, in denen Informationen über alle Komponenten abgelegt sind, die über die jeweilige Beziehung erreichbar sind und
• die Komponenten Verwaltungsschnittstellen aufweisen, die für jede Beziehung über eine Suchmethode verfügen, und
a) das Anlegen der Beziehung zwischen einem referenzierenden Objekt zu einem zu referenzierenden Objekt dadurch erfolgt, dass ausgelöst durch einen Aufruf das referenzierende Objekt den langlebigen Identifikator des zu referenzierenden Objektes abfragt und im langlebigen Speicher des referenzierenden Objektes ablegt und
b) ein Zugriff auf die Beziehungen zwischen Objekten in nachstehenden Schritten erfolgt:
b.1) ausgelöst durch einen Aufruf auf dem referenzierenden Objekt werden durch einen Zugriff auf seine Konfigurationsinformationen die Komponenten ermittelt, die referenziert werden können,
b.2) es erfolgt gleichzeitig oder nacheinander ein Verbindungsaufbau zu den Verwaltungsschnittstellen der ermittelten Komponenten,
b.3) es wird mittels einer Suchmethode der jeweiligen Verwaltungsschnittstelle nach einem oder mehreren zum beim referenzierenden Objekt gespeicherten langlebigen Identifikator des referenzierten Objektes passenden referenzierten Objekten gesucht,
b.4) als Ergebnis der Suche wird jeweils eine transiente Referenz auf das gefundene Objekt an das referenzierende Objekt geliefert und
b.5) falls das referenzierende Objekt mit maximal einem Objekt in Beziehung stehen kann, wird die erste gefundene Referenz als Ergebnismenge verwendet, und falls das referenzierende Objekt mit mehreren Objekten in Beziehung stehen kann, wird die Vereinigungsmenge aller von den Verwaltungsschnittstellen gelieferten transienten Referenzen als Ergebnismenge verwendet.

2. Verfahren zur Verwaltung von Beziehungen zwischen Objekten in einem komponentenbasierten Softwaresystem, wobei:
• das Softwaresystem in einem Rechnersystem implementiert ist, das wenigstens eine Datenbank und wenigstens einen Applikationsserver enthält,
• zu jeder in binärer Form im Applikationsserver installierten Komponente Konfigurationsinformationen installiert werden, in denen Informationen über alle Komponenten abgelegt sind, die über die jeweilige Beziehung erreichbar sind und
• die Komponenten Verwaltungsschnittstellen aufweisen, die für jede Beziehung über eine Suchmethode verfügen, und
a) das Anlegen der Beziehung zwischen einem referenzierenden Objekt zu einem zu referenzierenden Objekt dadurch erfolgt, dass ausgelöst durch einen Aufruf auf dem referenzierenden Objekt der langlebige Identifikator des referenzierenden Objektes durch einen Aufruf an das referenzierte Objekt übergeben und im langlebigen Speicher des referenzierten Objektes ablegt wird und
b) ein Zugriff auf die Beziehungen zwischen Objekten in nachstehenden Schritten erfolgt:
b.1) ausgelöst durch einen Aufruf auf dem referenzierenden Objekt durch einen Zugriff auf seine Konfigurationsinformationen die Komponenten ermittelt werden, die referenziert werden können,
b.2) es erfolgt gleichzeitig oder nacheinander ein Verbindungsaufbau zu den Verwaltungsschnittstellen der ermittelten Komponenten,
b.3) es wird mittels einer Suchmethode der jeweiligen Verwaltungsschnittstelle nach einem oder mehreren zum langlebigen Identifikator des referenzierenden Objektes passenden referenzierten Objekten gesucht,
b.4) als Ergebnis der Suche wird jeweils eine transiente Referenz auf das gefundene Objekt an das referenzierende Objekt geliefert und
b.5) falls das referenzierende Objekt mit maximal einem Objekt in Beziehung stehen kann, wird die erste gefundene Referenz als Ergebnismenge verwendet, und falls das referenzierende Objekt mit mehreren Objekten in Beziehung stehen kann, wird die Vereinigungsmenge aller von den Verwaltungsschnittstellen gelieferten transienten Referenzen als Ergebnismenge verwendet.

3. Verfahren nach Anspruch 1. oder 2., **dadurch gekennzeichnet:**
• **dass** als Applikationssserver ein Enterprise JavaBeans Container verwendet wird und
• die Konfigurationsinformationen zu den über die Beziehung erreichbaren Komponenten in Form von EJB-Referenzen auf diese Komponenten im lokalen Environment der Komponente als JNDI-Kontext hinterlegt werden.

4. System zur Verwaltung von Beziehungen zwischen Objekten in einem komponentenbasierten Softwaresystem, wobei:
• das Softwaresystem in einem Rechnersystem implementiert ist, das wenigstens eine Datenbank und wenigstens einen Applikationsserver enthält,
• zu jeder in binärer Form im Applikationsserver installierten Komponente Konfigurationsinformationen installiert sind, in denen Informationen über alle Komponenten abgelegt sind, die über die jeweilige Beziehung erreichbar sind, und
• die Komponenten Verwaltungsschnittstellen aufweisen, die für jede Beziehung über eine Suchmethode verfügen, und das System dafür eingerichtet ist, dass
a) das Anlegen der Beziehung zwischen einem referenzierenden Objekt zu einem zu referenzierenden Objekt dadurch erfolgt, dass ausgelöst durch einen Aufruf das referenzierende Objekt den langlebigen Identifikator des zu referenzierenden Objektes abfragt und im langlebigen Speicher des referenzierenden Objektes ablegt und
b) ein Zugriff auf die Beziehungen zwischen Objekten in nachstehenden Schritten erfolgt:
b.1) ausgelöst durch einen Aufruf auf dem referenzierenden Objekt werden durch einen Zugriff auf seine Konfigurationsinformationen die Komponenten ermittelt, die referenziert werden können,
b.2) es erfolgt gleichzeitig oder nacheinander ein Verbindungsaufbau zu den Verwaltungsschnittstellen der ermittelten Komponenten,
b.3) es wird mittels einer Suchmethode der jeweiligen Verwaltungsschnittstelle nach einem oder mehreren zum beim referenzierenden Objekt gespeicherten langlebigen Identifikator des referenzierten Objektes passenden referenzierten Objekten gesucht,
b.4) als Ergebnis der Suche wird jeweils eine transiente Referenz auf das gefundene Objekt an das referenzierende Objekt geliefert und
b.5) falls das referenzierende Objekt mit maximal einem Objekt in Beziehung stehen kann, wird die erste gefundene Referenz als Ergebnismenge verwendet, und falls das referenzierende Objekt mit mehreren Objekten in Beziehung stehen kann, wird die Vereinigungsmenge aller von den Verwaltungsschnittstellen gelieferten transienten Referenzen als Ergebnismenge verwendet.

5. System zur Verwaltung von Beziehungen zwischen Objekten in einem komponentenbasierten Softwaresystem, wobei:
• das Softwaresystem in einem Rechnersystem implementiert ist, das wenigstens eine Datenbank und wenigstens einen Applikationsserver enthält,
• zu jeder in binärer Form im Applikationsserver installierten Komponente Konfigurationsinformationen installiert sind, in denen Informationen über alle Komponenten abgelegt sind, die über die jeweilige Beziehung erreichbar sind, und
• die Komponenten Verwaltungsschnittstellen aufweisen, die für jede Beziehung über eine Suchmethode verfügen, und das System dafür eingerichtet ist, dass
a) das Anlegen der Beziehung zwischen einem referenzierenden Objekt zu einem zu referenzierenden Objekt dadurch erfolgt, dass ausgelöst durch einen Aufruf auf dem referenzierenden Objekt der langlebige Identifikator des referenzierenden Objektes durch einen Aufruf an das referenzierte Objekt übergeben und im langlebigen Speicher des referenzierten Objektes ablegt wird und
b) ein Zugriff auf die Beziehungen zwischen Objekten in nachstehenden Schritten erfolgt:
b.1) ausgelöst durch einen Aufruf auf dem referenzierenden Objekt durch einen Zugriff auf seine Konfigurationsinformationen die Komponenten ermittelt werden, die referenziert werden können,
b.2) es erfolgt gleichzeitig oder nacheinander ein Verbindungsaufbau zu den Verwaltungsschnittstellen der ermittelten Komponenten,
b.3) es wird mittels einer Suchmethode der jeweiligen Verwaltungsschnittstelle nach einem oder mehreren zum langlebigen Identifikator des referenzierenden Objektes passenden referenzierten Objekten gesucht,
b.4) als Ergebnis der Suche wird jeweils eine transiente Referenz auf das gefundene Objekt an das referenzierende Objekt geliefert und
b.5) falls das referenzierende Objekt mit maximal einem Objekt in Beziehung stehen kann, wird die erste gefundene Referenz als Ergebnismenge verwendet, und falls das referenzierende Objekt mit mehreren Objekten in Beziehung stehen kann, wird die Vereinigungsmenge aller von den Verwaltungsschnittstellen gelieferten transienten Referenzen als Ergebnismenge verwendet.
